# EUROPEAN PATENT APPLICATION

(11) **EP 4 516 936 A1**
(43) Date of publication of application: **05.03.2025**
(21) Application number: 23795686.7
(22) Date of filing: 12.06.2023
(51) Int. Cl.: C21D 6/00, C21D 8/02, C22C 38/00, C22C 38/02, C22C 38/04, C22C 38/06, C22C 38/28, C22C 38/32

(54) **ULTRAHIGH-STRENGTH COLD-ROLLED STEEL STRIP HAVING TENSILE STRENGTH OF 1450 MPA OR ABOVE AND MANUFACTURING METHOD THEREFOR**

(30) Priority: 29.04.2022 CN 202210473701
(71) Applicant: BAOSHAN IRON & STEEL CO., LTD., Shanghai 201900 (CN)
(72) Inventor: ZHU, Xiaodong, Shanghai 201900 (CN); XUE, Peng, Shanghai 201900 (CN); LI, Wei, Shanghai 201900 (CN)
(74) Representative: Kuhnen & Wacker Patent- und Rechtsanwaltsbüro PartG mbB
(86) International application number: PCT/CN2023/099743
(87) International publication number: WO 2023/208254

(57) **Abstract**

Disclosed in the present invention is an ultrahigh-strength cold-rolled steel strip having a tensile strength of 1450 MPa or above, comprising Fe and inevitable impurity elements, and further comprising the following chemical elements in percentage by mass: 0.19-0.245% of C, 0.03-0.45% of Si, 0.8-1.2% of Mn, 0.001-0.004% of B, 0.05-0.15% of Cu, 0.05-0.15% of Zr, 0.005-0.05% of Ti, and 0.01-0.08% of Al. The microstructure of said ultrahigh-strength cold-rolled steel strip comprises a matrix and carbide particles uniformly dispersed in the matrix, wherein the matrix has tempered martensite the volume fraction of which is 95% or above, and the average diameter of the carbide particles does not exceed 0.5 microns. In addition, further disclosed in the present invention is a manufacturing method for said ultrahigh-strength cold-rolled steel strip, comprising the following steps of: (1) smelting and casting, (2) hot rolling, (3) cold rolling after acid pickling, (4) continuous annealing, (5) tempering, and (6) leveling.

## Description

### Technical Field

The present disclosure relates to a steel and a method for manufacturing the same, in particular to a high-strength cold-rolled steel and a method for manufacturing the same.

### Background Art

In recent years, with the rapid development of the automotive industry, the market demand for vehicle weight reduction and safety has also increased. The use of steel plates with higher strength is required by many automobile manufacturers due to the need for vehicle weight reduction and safety.

However, it is found by research that the higher the strength of the steel plate, the worse its formability and toughness. When the steel plate inevitably comes into contact with hydrogen during processing and use, brittle fracture is easy to occur. That is, it has the characteristic of hydrogen embrittlement, which will seriously reduce the safety protection effect of the ultra-high strength steel and cause great trouble in application.

In the current prior art, some researchers have carried out relevant optimization design for the high-strength steel plates, and have achieved certain results. Some high-strength steels having a tensile strength of 1450MPa or more are obtained.

For example, the Chinese Patent publication No. CN110684932A, published on January 14, 2020, with a title of "A 1500MPa grade cold rolled steel strip and the manufacturing method thereof" has disclosed a 1500MPa grade cold rolled steel strip and the manufacturing method thereof, which has a chemical composition designed as: C: 0.25-0.4%, Si: 0.1-0.3%, Mn: 1.1-1.7%, Cr: 0.2-0.4, P: ≤0.02%, S: ≤0.012%, Al: 0.03-0.05%, Ti: 0.035-0.05, B: 0.001-0.003, V: 0.15-0.3, N: ≤0.003%. The production method in this technical solution includes steps of molten iron pretreatment, converter steelmaking, LF furnace refining, RH refining, continuous casting, hot rolling, cold rolling, continuous annealing and leveling, wherein the continuous annealing step is performed with a heating and soaking temperature of 820~860 °C, a soaking time of 50∼100s, a starting temperature for rapid cooling of 660∼680 °C, a cooling rate of 80~100 °C/s, and an over-aging temperature of 260~300 °C. The resultant strip steel has a structure of evenly distributed M-A Island and a very small amount of ferrite. It has ultra-high strength, excellent welding performance and cold formability.

Another example is the Chinese Patent publication No. CN112981252A, published on June 18, 2021, with a title of "A 1500MPa grade steel plate for automobile and the manufacturing method thereof" has disclosed a 1500MPa grade steel plate for automobile and the manufacturing method thereof, which has a chemical composition designed as: C: 0.17-0.21%, Si: 0.12-0.2%, Mn: 1.3-1.7%, P: ≤0.03%, S: ≤0.01%, Al: 0.03-0.05%, N: ≤0.005%. At the same time, the production method in this technical solution includes hot rolling, cold rolling, annealing, leveling and hot forming steps. The resultant steel plate for automobile obtained by adopting this technical solution has a tensile strength of 1500-1600MPa, a yield strength of 1000-1200Mpa, and an elongation of ≥5%.

Another example is the Chinese Patent publication No. CN112522573A, published on March 19, 2021, with a title of " A B-containing martensitic steel strip and the manufacturing method thereof" has disclosed a B-containing martensitic steel strip and the manufacturing method thereof, which has a chemical composition by mass percentage as follows: C: 0.16-0.26%, Si: 0.1-0.5%, Mn: 0.4-1.7%, P: ≤0.02%, S: ≤0.007%, Al: ≤0.001%, B: 0.001-0.006, V: 0.15-0.3, N: 0.004-0.01%, and further comprises one or two of Sn: 0.005-0.04% or Cu: 0.1-0.6%, one or two of Nb: 0.01-0.08 or Mo: 0.1-0.4, and Mn/S≥250. The martensitic steel strip has a yield strength of 800-1200Mpa, a tensile strength of 1100-1900MPa, and an elongation of 3-12%. It can be widely used in the field of high-strength automotive steel.

The ultra-high strength steels disclosed in the above patent documents all involve a strength of more than 1450MPa, and some of them involve the improvement of delayed cracking or hydrogen-induced cracking. However, the inventors find through research that the case in which the delayed cracking is caused by molding the steel plate into a part and then subjecting to paint baking is not considered in the above patent documents. It should be noted that when the steel is actually used for preparing the automobile parts, it needs to be formed and then subjected to paint baking. If the problem of delayed cracking after molding the part and then subjecting to paint baking, is not considered, it is prone to have quality defects after the parts are subjected to paint baking.

### Summary

One of the objects of the present disclosure is to provide an ultra-high strength cold-rolled steel strip having a tensile strength of 1450 MPa or more.

The present disclosure can provide an ultra-high strength cold-rolled steel strip having a tensile strength of 1450MPa or more through the matching of reasonable composition design and process design. The steel strip has ultra-high strength and excellent cold bending performance and good hydrogen-induced cracking resistance at the same time, and after the simulation of part forming and heating and holding at 170 °C for 20 minutes (paint baking process of automobile parts), it still has excellent toughness and hydrogen-induced cracking resistance.

The ultra-high strength cold-rolled steel strip according to the present disclosure can be effectively applied in the automobile industry, and is used to prepare the automobile parts, so as to realize vehicle weight reduction and ensure safety. It has a good promotion prospect and application value.

In order to realize the above purposes, the present disclosure provides an ultra-high strength cold-rolled steel strip having a tensile strength of 1450 MPa or more, which comprises Fe and unavoidable impurities, and further comprises the following chemical elements in mass percentages:
C: 0.19-0.245%, Si: 0.03-0.45%, Mn: 0.8-1.2%, B: 0.001-0.004%, Cu: 0.05-0.15%, Zr: 0.05-0.15%, Ti: 0.005-0.05%, Al: 0.01-0.08%;
wherein the microstructure has a matrix and carbide particles uniformly diffused and distributed in the matrix, wherein the matrix has 95% or more of tempered martensite by volume fraction, and the carbide particles have an average diameter of no more than 0.5 microns.

Further, the ultra-high strength cold-rolled steel strip of the present disclosure comprises the following chemical elements in mass percentages:
C: 0.19-0.245%, Si: 0.03-0.45%, Mn: 0.8-1.2%, B: 0.001-0.004%, Cu: 0.05-0.15%, Zr: 0.05-0.15%, Ti: 0.005-0.05%, Al: 0.01-0.08%, with a balance of Fe and unavoidable impurities.

In the above technical solution, the ultra-high strength cold-rolled steel strip according to the present disclosure adopts C, Si, Mn, B as the basic added elements in the chemical composition design. On the basis of ensuring the intensity, the carbon equivalent is also controlled as low as possible. According to the general empirical formula for calculating the strength of martensitic steel TS(MPa)=2880C+800, this formula is applicable when C is in the range of 0.2-0.5%. And the carbon content of the steel designed by the present disclosure for the same strength is lower than the calculated value by the empirical formula.

In addition, strong carbide forming elements such as Zr and Ti are added to the steel in the present disclosure, so that more precipitates, such as ZrC, Ti(C,N) and other fine and diffused precipitates, can be formed in the steel plate during processing, thereby improving the tempering resistance of martensite and inhibiting the precipitation of Fe₃C in the tempering process. Thus, the adsorption of more hydrogen by the reversible hydrogen trap is inhibited and the problem of excessive hydrogen diffusion in the steel plate is prevented. In addition, the ultra-high strength cold-rolled steel strip is also added with an appropriate amount of Cu element to improve the corrosion resistance of the steel.

For the ultra-high strength cold-rolled steel of the present disclosure, the principles for designing the various chemical elements will be described in detail as follows:
C: in the ultra-high strength cold-rolled steel of the present disclosure, C element improves the strength of the steel by affecting the hardness of martensite, and the addition of an appropriate amount of C to the steel is beneficial to the strength of the material. However, it should be noted that the higher the content of C element in the steel, the harder the martensite and the greater the tendency of brittleness, which is not conducive to welding. Therefore, considering the influence of the content of C element on the properties of the steel, the mass percentage of C element in the present disclosure is actually controlled at 0.19-0.245%.

Of course, in some preferred embodiments, in order to obtain better implementing effect, the mass percentage of C element may be further controlled at 0.195-0.24%.

Si: in the ultra-high strength cold-rolled steel of the present disclosure, Si has a solid solution strengthening effect, but it is also easy to promote the formation of residual austenite. Therefore, it is necessary to control the low Si content in the steel. In the present disclosure, the mass percentage of Si element is controlled at 0.03-0.45% to minimize the formation of residual austenite.

Of course, in some preferred embodiments, in order to obtain better implementing effect, the mass percentage of Si element may be further controlled at 0.03-0.4%.

Mn: in the ultra-high strength cold-rolled steel of the present disclosure, Mn is an important element to improve hardenability, which can improve the hardenability of the steel and is beneficial to strength. However, Mn will increase the carbon equivalent of the steel, so a design with as low Mn as possible should be used depending on the cooling method. Therefore, considering the influence of the content of Mn element on the performance of the steel, in the ultra-high strength cold-rolled steel of the present disclosure, the mass percentage of Mn element is controlled at 0.8-1.2%.

Of course, in some preferred embodiments, in order to obtain better implementing effect, the mass percentage of Mn element may be further controlled at 0.9-1.1%.

B: in the ultra-high strength cold-rolled steel of the present disclosure, B element can also improve the hardenability of the steel. In order to exert the beneficial effect of B element, to ensure the hardenability of the steel, the mass percentage of B element in the present disclosure is controlled at 0.001-0.004%.

Of course, in some preferred embodiments, in order to obtain better implementing effect, the mass percentage of B element may be further controlled at 0.0015-0.0035%.

Cu: in the ultra-high strength cold-rolled steel of the present disclosure, Cu can improve the corrosion resistance of the steel and is conductive to improving the hydrogen-induced cracking characteristics of the materials. However, it should be noted that excessive Cu should not be added to the steel, as too much Cu element can easily lead to high temperature brittleness in the steel. Therefore, the content of Cu element must be strictly controlled. In the present disclosure, the mass percentage of Cu element is controlled at 0.05-0.15%.

Zr: in the ultra-high strength cold-rolled steel of the present disclosure, Zr is a strong carbide forming element, and the addition of an appropriate amount of Zr in the steel can not only effectively inhibit the formation of residual austenite, but also is conductive to improving the strength and toughness of the steel. In the present disclosure, the mass percentage of Zr element is controlled at 0.05-0.15%.

Ti: in the ultra-high strength cold-rolled steel of the present disclosure, Ti element can play a role of fixing N and fully promote the improvement of hardenability by B. In addition, TiC formed by Ti element in the steel is conducive to the aggregation of dispersed hydrogen, but TiN is not conducive to the plasticity of the steel. Therefore, considering the influence of Ti element on the performance of the steel, in the present disclosure, the mass percentage of Ti element is controlled at 0.005-0.05%.

Of course, in some preferred embodiments, in order to obtain better implementing effect, the mass percentage of Ti element may be further controlled at 0.005-0.04%.

Al: in the ultra-high strength cold-rolled steel of the present disclosure, Al can play a role in deoxidation and it may be added as a deoxidizer to ensure the properties of the steel. Therefore, in order to exert the beneficial effect of Al element, in the present disclosure, the mass percentage of Al element is controlled at 0.01-0.08%.

To sum up, the chemical composition is reasonably designed in the present disclosure. After smelting, casting and rolling, and then rapid quenching in continuous annealing, it has, by volume fraction, at least 95% or more of martensite, with the rest of bainite. When unavoidable, it can contain a small amount of ferrite and residual austenite, but the content of ferrite and residual austenite is <0.5% by volume fraction. Its composition design and process design can minimize the content of residual austenite, and avoid the adverse effects of internal stress and brittle phase caused by the transformation of residual austenite into high-carbon martensite during the molding process.

In addition, by adding the strong carbide-forming element combination with appropriate types and contents, a large number of fine carbide particles are dispersed and precipitated in the matrix. These carbide particles are evenly dispersed and distributed in the metal matrix, and the average diameter of the particles does not exceed 0.5 microns. They are not easy to grow by tempering. Such design can effectively improve the tempering resistance of martensite, so that the precipitate particles are still fine after baking, and the hydrogen-induced cracking resistance of the material can be ensured

Further, in the ultra-high strength cold-rolled steel strip of the present disclosure, in the above unavoidable impurities, P≤0.015%, S≤0.002%, N≤0.005%.

In the ultra-high strength cold-rolled steel strip of the present disclosure, P, S and N are impurity elements in the steel. If the technical conditions permit, the amount of impurity elements in the steel should be minimized to obtain an ultra-high strength cold-rolled steel strip with better performance and better quality.

P: in the present disclosure, P is an impurity element in the steel. It reduces the toughness of the steel and may be detrimental to delayed fracture. Therefore, in the present disclosure, the content of P element must be strictly controlled and the mass percentage of P element is controlled to satisfy P≤0.015%.

S: in the present disclosure, S is also an impurity element in the steel. S will form MnS in steel and seriously affect the hole expansion ratio of the steel. Therefore, in the present disclosure, the content of P element must be strictly controlled and the mass percentage of S element is controlled to satisfy S≤0.002%.

N: in the present disclosure, N is also an impurity element in the steel. N can react with Ti in steel to precipitate large particles of TiN. When large TiN particles are located near the surface of the steel plate, it is easy to become a hydrogen accumulation area, which in turn forms a source of fracture. Therefore, it is required to control the mass percentage of N element to satisfy N≤0.005% to minimize the amount of TiN.

Of course, in some preferred embodiments, in order to obtain better implementation effects, the content of impurity elements P, S, and N may be further limited, and may be preferably controlled at P≤0.012%, S≤0.0015%, N≤0.004%.

Further, the ultra-high strength cold-rolled steel strip according to the present disclosure also comprises at least one of the following chemical elements:
W: 0.05-0.15%;
Mo: 0.05-0.15%;
Ni: 0.05-0.15%;
Ca: 0.0005-0.0035%;
Nb: 0.015-0.045%;
V: 0.005-0.015%.

In the present disclosure, in order to obtain the ultra-high strength cold-rolled steel strip with better performance, W, Mo, Ni, Ca, Nb, V elements may be further added in the present disclosure.

W: In the technical solution of the present disclosure, W is a strong carbide forming element. The addition of an appropriate amount of W to the steel is not only conducive to the formation of dispersed fine precipitates, but also conducive to the accumulation of dispersed hydrogen in local areas. Therefore, in order to exert the beneficial effect of W element, in the ultra-high strength cold-rolled steel strip according to the present disclosure, it is preferably to add 0.05-0.15% of W.

Mo: In the technical solution of the present disclosure, Mo element can improve the hardenability of the steel, which is not only conducive to the formation of diffusely distributed fine TiMoC precipitates, but also conducive to the accumulation of dispersed hydrogen in local areas. Therefore, in order to exert the beneficial effect of Mo element, in the ultra-high strength cold-rolled steel strip according to the present disclosure, it is preferably to add 0.05-0.15% of Mo.

Nb, V: In the technical solution of the present disclosure, Nb and V elements can play a role in refining grains and dispersion precipitation at the same time, which is conducive to the aggregation of dispersed hydrogen. Therefore, in the present disclosure, it is preferably to add an appropriate amount of Nb and V. The amount of Nb element is controlled at 0.015-0.045% and the amount of V element is controlled at 0.005-0.015%.

It should be noted that, similar to Zr and Ti elements in the steel, W, Mo, V, and Nb, which are preferably added as described above, are also strong carbide forming elements. The addition of Zr, W, Mo, V, Nb, Ti and other strong carbide forming elements in the steel allows to form more fine and diffused precipitates such as ZrC, WC, TiMoC, Ti(C,N), Nb(C,N) in the steel plate during the processing process, thereby improving the tempering resistance of martensite and inhibiting the precipitation of Fe3C during the tempering process.

Ni: In the technical solution of the present disclosure, Ni is beneficial to the improvement of the corrosion resistance of the steel, and the alleviation of the brittleness caused by Cu. Therefore, in the ultra-high strength cold-rolled steel strip according to the present disclosure, it is preferably to add 0.05-0.15% of Ni.

Ca: In the technical solution of the present disclosure, the addition of an appropriate amount of Ca can improve the aspect ratio of inclusions. In the present disclosure, it is preferably to add 0.0005-0.0035% of Ca.

Further, in the ultra-high strength cold-rolled steel strip according to the present disclosure, the mass percentage of each chemical element further satisfies at least one of the following:
C: 0.195-0.24%,
Si: 0.03-0.4%,
Mn: 0.9-1.1%,
B: 0.0015-0.0035%,
Ti: 0.005-0.04%.

Further, in the ultra-high strength cold-rolled steel strip according to the present disclosure, the matrix of its microstructure also includes bainite. Preferably, the volume fraction of bainite is 1.2-3.3%.

Further, in the ultra-high strength cold-rolled steel strip according to the present disclosure, the volume fraction of ferrite and residual austenite in the matrix of its microstructure is < 0.5%. Preferably, the volume fraction of ferrite and residual austenite is in the range of 0.3-0.4%, respectively.

Further, in the ultra-high strength cold-rolled steel strip according to the present disclosure, the carbide particles comprise Fe3C, and at least one of Ti(C,N), Nb(C,N), ZrC, WC, VC and TiMoC.

Further, in the ultra-high strength cold-rolled steel strip according to the present disclosure, the tensile strength is ≥1450MPa; impact toughness at room temperature (Charpy V-notch) is ≥38J/cm²; the hydrogen-induced cracking resistance satisfies: the U-bend specimen with preset stress equal to one time the tensile strength does not crack after being soaked in hydrochloric acid at a concentration of 1mol/L for more than 300 hours; after heating and holding at 170°C for 20 minutes, its hydrogen-induced cracking resistance satisfies: the U-bend specimen with preset stress greater than or equal to 1.2 times tensile strength does not crack after being soaked in hydrochloric acid at a concentration of 1mol/L for more than 300 hours. Preferably, the yield strength is in the range of 1190-1370MPa, the tensile strength is in the range of 1470-1650MPa, the elongation is in the range of 5-7% and the impact toughness at room temperature is 44-47J/cm².

Accordingly, another object of the present disclosure is to provide a method for manufacturing the above ultra-high strength cold-rolled steel strip. The inventors further optimize the manufacturing process of the manufacturing method to adapt it to the chemical composition design of the steel strip. This manufacturing method can effectively prepare the ultra-high strength cold-rolled steel strip of the present disclosure and has a good application prospect.

To achieve the above purpose, the present disclosure provides a manufacturing method for the above ultra-high strength cold-rolled steel strip, comprising steps of:
(1) smelting and casting;
(2) hot-rolling: wherein the steel is heated to 1150~1200°C and held for 40~50min, the final rolling temperature is controlled at 870-920°C, rapidly cooled to a coiling temperature after rolling with a cooling rate of 20~50°C/s; wherein the coiling temperature is controlled at 500~600°C and cooled under control after coiling;
(3) cold rolling after pickling;
(4) continous annealing;
(5) tempering: the steel is heated to a tempering temperature of 200~300°C by induction heating and held for 150s or more.

In the manufacturing method for the above ultra-high strength cold-rolled steel strip according to the present disclosure, the inventors optimize the design of hot rolling process, which adopts the process of low temperature heating, low temperature final rolling and low temperature coiling. Of course, the steel coil obtained after coiling can be further rapidly cooled by fan blowing to inhibit the precipitation and growth of precipitates (WC/TiMoC/Ti(C,N)/Nb(C,N)), so that secondary precipitation occurs in the continuous annealing process of the cold-rolled plate, thereby obtaining the precipitation of finer strong carbides.

In addition, in the above step (5) according to the present disclosure, the inventors controll the tempering temperature at 200-300°C, in order to reduce the hardness of martensite and control the size of Fe₃C precipitates through low-temperature tempering.

Further, in the manufacturing method according to the present disclosure, in step (2), the steel is first cooled by air cooling until the surface temperature of the steel coil is 400-500°C, and then cooled by fan blowing until the surface temperature of the steel coil is lower than 200°C.

In the above technical solution of the present disclosure, the purpose of the controlled cooling after coiling is to inhibit the precipitation of part of the strong carbides (WC, TiMoC, Ti(C,N), Nb(C,N), etc.) in the cooling process of the hot-rolled coil by accelerating cooling, so that the secondary precipitation occurs during the continuous annealing process of the cold-rolled plate, thereby obtaining the precipitation of finer strong carbides.

Further, in the manufacturing method according to the present disclosure, in step (3), the cold rolling reduction rate is controlled at 30~65%.

Further, in the manufacturing method according to the present disclosure, in step (4), the steel is heated to the austenitic single-phase zone at a heating rate of 5 °C/s or more for 30~120s; then cooled to 700~780°C at a rate of 3~10°C/s, then cooled to 100°C or lower by water cooling at a rate of no less than 700°C/s, and then pickled.

Accordingly, in some preferred embodiments, after the completion of the above step (4), the pickled steel plate can be further alkaline washed and cleaned to remove the residual acid on the surface of the steel plate. After the steel plate is dried, it is heated to 200-300 °C by induction heating for tempering. The tempering time is preferably controlled not less than 200s to obtain tempered martensite. The secondary precipitate particles are fine.

Certainly, after the steel plate is alkaline washed and cleaned to remove the residual acid on the surface of and dried, it can be further preferably heated to a tempering temperature of 200-250 °C by induction heating, and subjected to tempering for no less than 400s and may be leveled after the tempering treatment.

Further, in the manufacturing method according to the present disclosure, in step (6), the leveling rate is controlled at ≤0.3%.

Compared with the prior art, the ultra-high strength cold-rolled steel strip having a tensile strength of 1450MPa or more and the manufacturing method thereof according to the present disclosure has the following advantages and beneficial effects:
Compared with the steel in the prior art, the present disclosure obtains an ultra-high strength cold-rolled steel strip having a tensile strength of 1450MPa or more with a lower carbon equivalent. The inventors adopt a reasonable chemical composition, which effectively inhibits the formation of residual austenite, so that the content of residual austenite is controlled at 0.5% or lower, and the additional stress caused by the transformation of residual austenite into high-carbon martensite during the molding process is avoided.

In addition, in the design of chemical composition, the inventors effectively inhibit the enrichment of local solid dissolved carbon by adding strong carbide forming elements, which further inhibits the formation of residual austenite. At the same time, a large number of fine precipitates are dispersed in the steel, which can improve the toughness of the steel plate, effectively avoid the reduction of toughness caused by the accumulation and growth of carbides in the subsequent paint baking of the parts, and improve the delayed cracking resistance of the parts due to the internal stress relief effect of the baking process.

The ultra-high strength cold-rolled steel strip not only has ultra-high strength of 1450MPa or more, but also has excellent cold bending performance and good hydrogen-induced cracking resistance, and the steel has excellent toughness and hydrogen-induced cracking resistance after heating and holding at 170°C for 20 minutes. The microstructure of the ultra-high-strength cold-rolled steel strip is dominated by tempered martensite, which contains at least 95% of tempered martensite with the rest of bainite. When unavoidable, it may contain a small amount of ferrite and residual austenite, but each content by volume fraction is < 0.5%, respectively. In terms of substructure, the outstanding feature of the ultra-high strength cold-rolled steel strip plate is that a large number of fine carbide particles are dispersed and precipitated in the matrix, including Fe3C, and further including Ti(C,N), Nb(C,N), ZrC, WC, VC, TiMoC, etc. depending on different cost. These carbide particles are evenly dispersed and distributed in the metal matrix, and the average diameter of the particles is not more than 0.5 microns.

The ultra-high strength cold-rolled steel strip has good hydrogen-induced cracking resistance. The U-bend specimen prepared therefrom with preset stress equal to one time the tensile strength does not crack after being soaked in hydrochloric acid at a concentration of 1mol/L for 300 hours or more; after the steel plate is subjected to 2% preformation, heated and held at 170°C for 20 minutes (stimulating the automobile part forming and paint baking process), its hydrogen-induced cracking resistance is further improved: i.e., the U-bend specimen with preset stress equal to 1.2 times tensile strength does not crack after being soaked in hydrochloric acid at a concentration of 1mol/L for 300 hours or more. This characteristic imparts the above ultra-high strength cold-rolled steel strip better service performance when it is used in the manufacture of automobile safety structural parts.

### Description of the Drawings

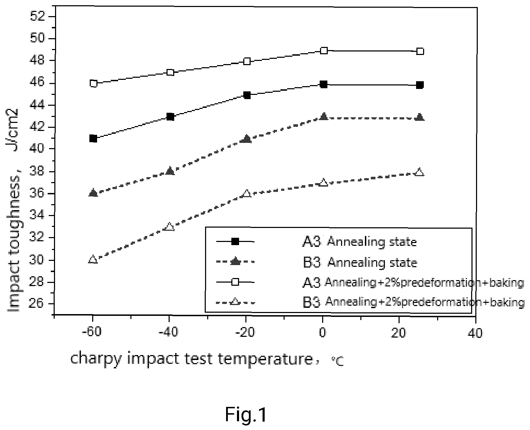

Fig. 1 schematically shows the impact toughness of the ultra-high strength cold-rolled steel strip of Example 3 and the ultra-high strength cold-rolled steel strip in Comparative Example 3 in annealing state and annealing + 2% predeformtion + baking state, respectively.

### Detailed Description

The ultra-high strength cold-rolled steel strip according to the present disclosure and the manufacturing method therefor will be further interpreted and explained below in combination with specific examples, but the interpretation and explanation do not constitute an undue limitation to the technical solution of the present disclosure.

### Example 1-8 and Comparative Example 1-3

The ultra-high strength cold-rolled steel strips of Examples 1-8 according to the present disclosure and the comparative steel strips of Comparative Examples 1-3 were prepared by the following steps:
(1) Smelting and casting were performed according to the chemical compositions shown in Table 1.
(2) Hot-rolling: the obtained slab was heated and hot rolled, wherein the slab was heated to 1150~1200°C and held for 40~50min with the final rolling temperature controlled at 870-920°C; the slab was rapidly cooled to a coiling temperature after rolling, wherein the cooling rate was controlled at 20~50°C/s and the coiling temperature was controlled at 500-600°C; the slab was cooled under control after coiling as follows: it was firstly air-cooled until the surface temperature of the steel coil reached a certain temperature in the range of 400-500°C, and then cooled by fan blowing until the surface temperature of the steel coil was lower than 200°C.
(3) cold rolling after pickling: the steel was pickled by the conventional pickling process and then cold rolled, wherein the cold rolling reduction rate was controlled at 30~65%.
(4) continuous annealing : the cold rolled steel plate was subjected to continous annealing as follows: it was heated to the austenitic single-phase zone at a heating rate of 5 °C/s or more for 30~120s; then cooled to 700~780°C at a rate of 3~10°C/s, then cooled to 100°C or lower by water cooling at a rate of no less than 700°C/s, and then pickled.
(5) tempering: the steel was heated to a tempering temperature of 200-300 °C by induction heating and held for 150s or more. Preferably, the tempering time was controlled not less than 200s. Certainly, in some preferred embodiments, the tempering temperature was controlled at 200-250°C and the tempering was performed for no less than 400s.
(6) optional leveling step: the tempered steel was subjected to leveling, wherein the leveling rate was controlled at ≤0.3% (Example 4 does not include the leveling step).

It should be noted that the leveling process of the above step (6) was not a necessary step for the ultra-high-strength cold-rolled steel strips of Examples 1-8 of the present disclosure. In Example 4, even if the above leveling step was not adopted, the ultra-high-strength cold-rolled steel strip with excellent performance could also be obtained.

In the present disclosure, the chemical element composition and related process design of the ultra-high strength cold-rolled steel strips of Examples 1-8 according to the present disclosure all meet the design requirements of the present disclosure. The comparative steel strips of Comparative Examples 1-3 were also prepared by adopting the above steps, but its chemical element composition and/or related process parameters comprise parameters that do not conform to the design of the present disclosure.

Table 1 lists the mass percentages of various chemical elements in the ultra-high strength cold-rolled steel strips of Examples 1-8 and the comparative steel strips of Comparative Examples 1-3.

**Table 1. (wt%, a balance of Fe and other unavoidable impurities except P, S and N)**

| No. | Steel No. | Chemical element | | | | | | | | | | | | | | | | |
|---|---|---|---|---|---|---|---|---|---|---|---|---|---|---|---|---|---|---|
| | | C | Si | Mn | B | P | S | Al | N | Zr | Ti | Cu | Ni | W | Mo | Ca | Nb | V |
| Ex. 1 | A1 | 0.19 | 0.45 | 1.05 | 0.002 | 0.012 | 0.002 | 0.05 | 0.0025 | 0.15 | 0.025 | 0.05 | - | - | - | 0.001 | 0.045 | - |
| Ex. 2 | A2 | 0.20 | 0.4 | 1.15 | 0.0015 | 0.015 | 0.0015 | 0.08 | 0.002 | 0.13 | 0.03 | 0.07 | - | - | - | 0.0005 | 0.02 | 0.005 |
| Ex. 3 | A3 | 0.21 | 0.35 | 1.2 | 0.001 | 0.01 | 0.001 | 0.01 | 0.0015 | 0.12 | 0.04 | 0.09 | - | 0.05 | - | 0.0015 | 0.005 | 0.015 |
| Ex. 4 | A4 | 0.22 | 0.25 | 1.1 | 0.0025 | 0.01 | 0.0008 | 0.02 | 0.002 | 0.14 | 0.035 | 0.1 | - | 0.1 | 0.1 | 0.0025 | 0.03 | 0.01 |
| Ex. 5 | A5 | 0.23 | 0.15 | 1 | 0.003 | 0.01 | 0.0017 | 0.025 | 0.005 | 0.1 | 0.02 | 0.11 | 0.1 | - | 0.05 | 0.003 | 0.035 | 0.005 |
| Ex. 6 | A6 | 0.24 | 0.1 | 0.95 | 0.0035 | 0.008 | 0.0015 | 0.03 | 0.0022 | 0.08 | 0.03 | 0.13 | - | 0.15 | - | 0.0035 | 0.02 | - |
| Ex. 7 | A7 | 0.245 | 0.05 | 0.8 | 0.004 | 0.006 | 0.001 | 0.045 | 0.0025 | 0.06 | 0.045 | 0.15 | 0.15 | - | 0.15 | - | - | 0.012 |
| Ex. 8 | A8 | 0.24 | 0.03 | 0.9 | 0.004 | 0.005 | 0.0012 | 0.05 | 0.0029 | 0.05 | 0.015 | 0.12 | 0.05 | 0.05 | 0.1 | - | - | 0.015 |
| CEx. 1 | B1 | 0.19 | 0.2 | **1.4** | 0.0025 | 0.015 | 0.0012 | 0.03 | 0.003 | - | 0.02 | - | - | - | - | - | - | - |
| CEx. 2 | B2 | 0.22 | **1.2** | **1.6** | 0.002 | 0.012 | 0.001 | 0.035 | 0.002 | - | - | - | - | - | - | - | 0.03 | - |
| CEx. 3 | B3 | 0.245 | 0.4 | **1.7** | 0.0015 | 0.01 | 0.002 | 0.045 | 0.0045 | - | 0.015 | - | - | - | - | - | 0.04 | - |

Table 2-1 and Table 2-2 list the specific process parameters of the ultra-high strength cold-rolled steel strips of Examples 1-8 and the comparative steel strips of Comparative Examples 1-3.

**Table 2-1.**

| No. | Step (2) | | | | | | | Step (3) |
|---|---|---|---|---|---|---|---|---|
| | heating temperature of hot rolling (°C) | Holding time (min) | Final rolling temperature of hot rolling (°C) | Cooling rate (°C/s) | Coiling temperature (°C) | Starting temperature of fan blowing after coiling (°C) | Surface temperature of steel coil after fan blowing (°C) | Cold rolling reduction (%) |
| Ex. 1 | 1150 | 40 | 870 | 20 | 500 | 400 | 200 | 30 |
| Ex. 2 | 1150 | 45 | 870 | 30 | 530 | 400 | 170 | 35 |
| Ex. 3 | 1180 | 50 | 870 | 40 | 550 | 450 | 150 | 40 |
| Ex. 4 | 1180 | 40 | 900 | 50 | 570 | 500 | 120 | 45 |
| Ex. 5 | 1200 | 45 | 900 | 40 | 600 | 500 | 100 | 50 |
| Ex. 6 | 1200 | 50 | 900 | 50 | 550 | 450 | 150 | 55 |
| Ex. 7 | 1200 | 40 | 920 | 30 | 600 | 500 | 140 | 60 |
| Ex. 8 | 1200 | 45 | 920 | 20 | 530 | 400 | 160 | 65 |
| CEx. 1 | **1230** | 40 | 870 | 20 | 600 | **Air cooling-** | | 40 |
| CEx. 2 | **1230** | 45 | 870 | 40 | 600 | **Air cooling** - | | 50 |
| CEx. 3 | **1250** | 50 | 870 | 50 | 600 | **Air cooling** - | | 60 |

**Table 2-2.**

| No. | Step (4) | | | | | | | Step (5) | | Step (6) |
|---|---|---|---|---|---|---|---|---|---|---|
| | Heating rate (°C/s) | Holding temperature (°C) | Holding time at austenitic single-phase zone (s) | Cooling rate of slow cooling in the first stage (°C/s) | starting temperature of rapid cooling in the second stage (°C) | Cooling rate of rapid cooling in the second stage (°C/s) | Final cooling temperature in the second stage (°C) | Tempering temperature (°C) | Tempering holding time (s) | Leveling rate (%) |
| Ex. 1 | 10 | 860 | 30 | 10 | 720 | 700 | 70 | 200 | 450 | 0.1 |
| Ex. 2 | 5 | 850 | 50 | 7 | 740 | 800 | 50 | 210 | 300 | 0.2 |
| Ex. 3 | 15 | 870 | 70 | 5 | 760 | 900 | 60 | 240 | 200 | 0.3 |
| Ex. 4 | 20 | 840 | 80 | 10 | 780 | 1000 | 40 | 300 | 150 | 0 |
| Ex. 5 | 30 | 835 | 100 | 8 | 700 | 1200 | 45 | 270 | 250 | 0.15 |
| Ex. 6 | 50 | 835 | 120 | 3 | 750 | 1100 | 55 | 220 | 300 | 0.3 |
| Ex. 7 | 10 | 830 | 90 | 5 | 745 | 1300 | 65 | 210 | 400 | 0.15 |
| Ex. 8 | 15 | 840 | 65 | 8 | 735 | 850 | 45 | 200 | 500 | 0.1 |
| CEx. 1 | 15 | 840 | 80 | 8 | 750 | 800 | 55 | 200 | 250 | 0.3 |
| CEx. 2 | 10 | 850 | 60 | 5 | 750 | 900 | 60 | 220 | 350 | 0.2 |
| CEx. 3 | 15 | 860 | 70 | 8 | 750 | 1000 | 70 | 240 | 300 | 0.1 |

The obtained finished products of the ultra-high strength cold-rolled steel strips of Example 1-8 and the comparative steel strips of Comparative Example 1-3 were sampled respectively, and the microstructure of the steel strip sample of each Example and Comparative Example were observed and analyzed. It was observed that the microstructure of the ultra-high-strength cold-rolled steel strips of Example 1-8 has a matrix and carbide particles uniformly diffused and distributed in the matrix. The specific analysis results are listed in the following Table 3.

The observation and analysis results of the microstructure of the ultra-high strength cold-rolled steel strips of Example 1-8 and the comparative steel strips of Comparative Example 1-3 are listed in Table 3.

**Table 3.**

| No. | microstructure | | | | | |
|---|---|---|---|---|---|---|
| | matrix | | | | carbide particles uniformly diffused and distributed in the matrix | |
| | Volume fraction of tempered martensite | Volume fraction of bainite | Volume fraction of ferrite | Volume fraction of residual austenite | Components of carbide particles | Average diameter of carbide particles, microns |
| Ex. 1 | 96 | 3.2 | 0.4 | 0.4 | Fe3C, Ti (C,N), Nb(C,N), ZrC | 0.4 |
| Ex. 2 | 96 | 3.3 | 0.4 | 0.3 | Fe3C, Ti (C,N), Nb(C,N), ZrC, VC | 0.3 |
| Ex. 3 | 97 | 2.3 | 0.3 | 0.4 | Fe3C, Ti (C,N), Nb(C,N), ZrC, WC, VC | 0.2 |
| Ex. 4 | 97 | 2.2 | 0.4 | 0.4 | Fe3C, Ti (C,N), Nb(C,N), ZrC, WC, VC, TiMoC | 0.1 |
| Ex. 5 | 98 | 1.2 | 0.4 | 0.4 | Fe3C, Ti (C,N), Nb(C,N), ZrC, VC, TiMoC | 0.15 |
| Ex. 6 | 98 | 1.3 | 0.4 | 0.3 | Fe3C, Ti (C,N), Nb(C,N), ZrC, WC, VC | 0.25 |
| Ex. 7 | 97 | 2.3 | 0.4 | 0.3 | Fe3C, Ti (C,N), ZrC, VC, TiMoC | 0.3 |
| Ex. 8 | 96 | 3.2 | 0.4 | 0.4 | Fe3C, Ti (C,N), ZrC, WC, VC, TiMoC | 0.2 |
| CEx. 1 | 97 | 0.8 | **1.2** | **1** | Fe3C, Ti (C,N) | **0.8** |
| CEx. 2 | **94** | 1.5 | **1.5** | **3** | Fe3C, Nb(C,N) | **0.6** |
| CEx. 3 | **93** | 4 | **1** | **2** | Fe3C, Ti (C,N), Nb(C,N) | **0.7** |

It can be seen from the above Table 3 that the microstructure of the ultra-high strength cold-rolled steel strips of Example 1-8 according to the present disclosure comprises a matrix and carbide particles uniformly diffused and distributed in the matrix. These carbide particles have an average diameter of no more than 0.5 microns.

In the present disclosure, the matrix of the microstructure of the ultra-high-strength cold-rolled steel strips of Example 1-8 may comprise tempered martensite, bainite, ferrite and residual austenite, wherein the volume fraction of tempered martensite is in the range of 96-98%, all greater than 95%; the volume fraction of bainite is in the range of 1.2-3.3%; the volume fraction of ferrite is in the range of 0.3-0.4% and the volume fraction of residual austenite is in the range of 0.3-0.4%.

Correspondingly, through the observation and analysis by the inventors, it is found that, in the microstructure of the ultra-high-strength cold-rolled steel strips in Example 1-8, the strong carbide particles uniformly diffused and distributed in the matrix may include: Fe3C, Ti (C,N), Nb(C,N), ZrC, WC, VC, TiMoC.

After the completion of the above observation and analysis of the microstructure, in order to detect the performance of the steel strip, the inventors further sampled the finished products of the ultra-high strength cold-rolled steel strip of Example 1-8 and the comparative steel strips of Comparative Example 1-3 respectively, and carried out various performance tests. The obtained test results are listed in Table 4.

The technical means for testing relevant performance were as follows:
(1) Tensile test: according to GB/T 3076-1982 Method for tensile testing of metallic sheet, under 50mm gauge, the samples were tested to obtain the yield strength, tensile strength and elongation (δ) of the steel plate in original annealing state of each Example and Comparative Example.
(2) Impact test: according to GB/T229-199 Metallic materials-Charpy notch impact test, under room temperature 25°C or other temperature condition, the samples were tested to obtain the impact toughness of the steel plate in original annealing state of each Example and Comparative Example. The steel plates in original annealing state were subjected to 2% pre-deformation, then simulated 170°C baking for 20 minutes. The impact toughness test was performed according to the above method to obtain the impact toughness of the steel plate in original annealing state after stimulated parts forming and paint baking. The results are shown in Fig. 1.
(3) cold bending: according to GB/T38806-2020 Metallic Materials-Sheet and strip-Test method for bending and folding properties, the steel plates in original annealing state of Example 1-8 and Comparative Example 1-3 were cold-bent at 90° to test the minimum bending radius. After cold bending, the inner bending radius/plate thickness of the ultra-high strength cold-rolled steel strips of Example 1-8 is 3 and the inner bending radius/plate thickness of the comparative steel strips of Comparative Example 1-3 is 3.5.
(4) the hydrogen-induced cracking resistance test of the steel strip before paint baking was carried out by the following non-standard method: the thickness of the steel plate for testing was 1.2mm; the size of the U-bend steel plate specimen was 150mm×30mm×1.2mm; 1 strain gauge was placed at the position of maximum strain on each sample; the allowable error of the preset stress value was ±2%; the immersion temperature was room temperature; the immersion test should be carried out within 4 hours after the preset stress bending treatment (without considering the influence of the stress relaxation caused by natural aging on the test results), and the steel plate in original annealing state of each Example and Comparative Example was subjected to U-bending to obtain the corresponding U-bend steel plate specimen (the U-bend inner corner radius was 8mm, and the stress level in the U-bend vault area controlled by strain gauge was 1 times the tensile strength), then placed in hydrochloric acid with a concentration of 1 mol/L for soaking, and observed whether crackingoccurred after it was soaked for 300 hours. If no cracking occurred, it indicated excellent hydrogen-induced cracking resistance. If cracking occurred, the cracking time was recorded, and it indicated that the cracked steel had poor hydrogen-induced cracking resistance.
(5) the hydrogen-induced cracking resistance test of the steel strip after 2% pre-deformation and heating and holding at 170°C for 20 mins (paint baking process) was carried out by the following non-standard method: the thickness of the steel plate for testing was 1.2mm; the size of the U-bend steel plate specimen was 150mm×30mm×1.2mm; 1 strain gauge was placed at the position of maximum strain on each sample; the allowable error of the preset stress value was ±2%; the immersion temperature was room temperature; the immersion test should be carried out within 4 hours after the preset stress bending treatment (without considering the influence of the stress relaxation caused by natural aging on the test results); the steel plate was firstly subjected to simulated part forming with 2% pre-deformation and the steel plate was then heated to 170°C and held for 20 minutes to simulate the paint baking process of the part; the U-bend steel after the completion of pre-deformation and simulated paint baking process (the U-bend inner corner radius was 8mm, and the stress level in the U-bend vault area controlled by strain gauge was 1 times the tensile strength) of each Example and Comparative Example was placed in hydrochloric acid with a concentration of 1mol/L for soaking, and observed whether cracking occurred after it was soaked for 300 hours. If no cracking occurred, it indicated excellent hydrogen-induced cracking resistance. If cracking occurred, the cracking time was recorded, and it indicated that the cracked steel had poor hydrogen-induced cracking resistance.

The performance test results of the ultra-high strength cold-rolled steel strips of Example 1-8 and the comparative steel strip of Comparative Example 1-3 are listed in Table 4.

**Table 4.**

| No. | Yield strength σs (MPa) | Tensile strength σb (MPa) | elongation (δ) (%) | Impact toughness at room temperature (J/cm²) | Plate thickness (mm) | 90 degree cold bending (Inner bending radius/plate thickness) | Quenched and tempered steel plate for U bending (stress level 1.0*TS) 1 mol/L hydrochloric acid soaking result | Quenched and tempered steel plate with 2% pre-deformation+ 170°C baking for U bending (stress level 1.2*TS) 1 mol/L hydrochloric acid soaking result |
|---|---|---|---|---|---|---|---|---|
| Ex. 1 | 1190 | 1470 | 7 | 44 | 1.2mm | 3 | No cracking after 300 h | No cracking after 300 h |
| Ex. 2 | 1260 | 1530 | 6 | 46 | 1.2mm | 3 | No cracking after 300 h | No cracking after 300 h |
| Ex. 3 | 1270 | 1560 | 6 | 46 | 1.2mm | 3 | No cracking after 300 h | No cracking after 300 h |
| Ex. 4 | 1280 | 1580 | 6 | 47 | 1.2mm | 3 | No cracking after 300 h | No cracking after 300 h |
| Ex. 5 | 1300 | 1600 | 5 | 46 | 1.2mm | 3 | No cracking after 300 h | No cracking after 300 h |
| Ex. 6 | 1320 | 1620 | 5 | 47 | 1.2mm | 3 | No cracking after 300 h | No cracking after 300 h |
| Ex. 7 | 1370 | 1650 | 5 | 45 | 1.2mm | 3 | No cracking after 300 h | No cracking after 300 h |
| Ex. 8 | 1320 | 1610 | 5 | 46 | 1.2mm | 3 | No cracking after 300 h | No cracking after 300 h |
| CEx. 1 | 1150 | 1420 | 7 | 40 | 1.2mm | 3.5 | No cracking after 300 h | **Cracking after 200 h** |
| CEx. 2 | 1220 | 1510 | 6 | 39 | 1.2mm | 3.5 | **Cracking after 192h** | **Cracking after 45 h** |
| CEx. 3 | 1280 | 1560 | 6 | 42 | 1.2mm | 3.5 | No cracking after 300 h | **Cracking after 140 h** |

It can be seen from Table 4 that the comprehensive performance of the ultra-high strength cold-rolled steel strips of Example 1-8 according to the present disclosure is significantly better than that of the comparative steel strips of Comparative Example 1-3.

According to Table 4, the ultra-high strength cold-rolled steel strips of Example 1-8 all have excellent mechanical performance. The yield strength is in the range of 1190-1370MPa, the tensile strength is in the range of 1470-1650MPa, the elongation is in the range of 5-7% and the impact toughness is in the range of 44-47J/cm². In addition, after the ultra-high strength cold-rolled steel strips of Example 1-8 were subjected to 90°cold bending, they all have the inner bending radius/plate thickness of 3, lower than that of Comparative Example 1-3, indicating better cold bending performance.

Correspondingly, no matter whether it was tested before paint baking or after simulated pre-deformation and heating and holding at 170 °C for 20 minutes (paint baking process), the U-bend steel materials corresponding to the ultra-high strength cold-rolled steel strips in Example 1-8 of the present disclosure did not crack after being soaked in hydrochloric acid at a concentration of 1mol/L for 300h. It had very excellent hydrogen-induced cracking resistance before and after paint baking.

In contrast, the comparative steel strips of Comparative Example 1-3 did not have good hydrogen-induced cracking resistance after heating and holding at 170 °C for 20 minutes (paint baking process) because its chemical element composition and the preparation process did not meet the design requirements of the present disclosure. When it was soaked in hydrochloric acid at a concentration of 1mol/L, cracking occurred early and the safety performance was not good.

Fig. 1 schematically shows the impact toughness of the ultra-high strength cold-rolled steel strip of Example 3 and the comparative steel strip of Comparative Example 3 in annealing state and annealing + 2% predeformtion + baking state, respectively.

In Fig.1, in the toughness tests, the steel plate in original annealing state was directly tested or tested after stimulated parts forming and paint baking. "A3 annealing state" corresponds to "the original annealing state of the steel plate of Example 3", "B3 annealing state" corresponds to "the original annealing state of the steel plate of Comparative Example 3"; "A3 annealing state + 2% pre-deformation+ baking state" corresponds to "the state of the steel plate in original annealing state of Example 3 after it is subjected to 2% pre-deformation, then stimulated 170°C paint baking for 20 mins"; "B3 annealing state + 2% pre-deformation+ baking state" corresponds to "the state of the steel plate in original annealing state of Comparative Example 3 after it is subjected to 2% pre-deformation, then stimulated 170°C paint baking for 20 mins".

As shown in Fig.1, after the ultra-high strength cold-rolled steel strip prepared in Example 3 of the present disclosure is subjected to simulated forming process with 2% pre-deformation, and then baking at 170 °C for 20 minutes, the hydrogen-induced cracking resistance and toughness of the material are further improved. It shows that the material has excellent service performance when it is actually used in automobile. In contrast, the toughness of the comparative steel of Comparative Example 3 decreases after it is subjected to simulated forming with 2% pre-deformation and baking at 170°C for 20 minutes.

It should be noted that the combination of the technical features in the present disclosure is not limited to the combination described in the claims or the specific embodiments, and all the technical features recorded herein may be freely combined or combined in any way, unless there is a contradiction between them.

It should also be noted that the examples listed above are only specific embodiments of the present disclosure. Obviously, the present disclosure is not limited to the above embodiments, and similar changes can be made thereby. All the modifications directly derived from the contents disclosed in the present disclosure or easily envisaged by those skilled in the art shall fall within the protection scope of the present disclosure.

## Claims

1. An ultra-high strength cold-rolled steel strip having a tensile strength of 1450 MPa or more, which comprises Fe and unavoidable impurities, wherein it further comprises the following chemical elements in mass percentages:
C: 0.19-0.245%, Si: 0.03-0.45%, Mn: 0.8-1.2%, B: 0.001-0.004%, Cu: 0.05-0.15%, Zr: 0.05-0.15%, Ti: 0.005-0.05%, Al: 0.01-0.08%;
wherein its microstructure has a matrix and carbide particles uniformly diffused and distributed in the matrix, wherein the matrix has 95% or more of tempered martensite by volume fraction, and the carbide particles have an average diameter of no more than 0.5 microns.

2. The ultra-high strength cold-rolled steel strip according to claim 1, wherein the mass percentage of each chemical element is as follows:
C: 0.19-0.245%, Si: 0.03-0.45%, Mn: 0.8-1.2%, B: 0.001-0.004%, Cu: 0.05-0.15%, Zr: 0.05-0.15%, Ti: 0.005-0.05%, Al: 0.01-0.08%, with a balance of Fe and unavoidable impurities; preferably, the volume fraction of tempered martensite is in the range of 96-98%, the average diameter of the carbide particles is 0.1-0.4 microns.

3. The ultra-high strength cold-rolled steel strip according to claim 1 or 2, wherein among the unavoidable impurities, P≤0.015%, S≤0.002%, N≤0.005%; preferably, P≤0.012%, S≤0.0015%, N≤0.004%.

4. The ultra-high strength cold-rolled steel strip according to claim 1 or 2, wherein it further comprises at least one of the following elements:
W: 0.05-0.15%;
Mo: 0.05-0.15%;
Ni: 0.05-0.15%;
Ca: 0.0005-0.0035%;
Nb: 0.015-0.045%;
V: 0.005-0.015%.

5. The ultra-high strength cold-rolled steel strip according to claim 1 or 2, wherein the mass percentage of each chemical element satisfies at least one of the following items:
C: 0.195-0.24%,
Si: 0.03-0.4%,
Mn: 0.9-1.1%,
B: 0.0015-0.0035%,
Ti: 0.005-0.04%.

6. The ultra-high strength cold-rolled steel strip according to claim 1 or 2, wherein the matrix of the microstructure further comprises bainite; preferably, the volume fraction of bainite is 1.2-3.3%.

7. The ultra-high strength cold-rolled steel strip according to claim 1 or 2, wherein the volume fraction of ferrite and residual austenite in the matrix of the microstructure is < 0.5%, respectively; preferably, the volume fraction of ferrite and residual austenite is in the range of 0.3-0.4%, respectively.

8. The ultra-high strength cold-rolled steel strip according to claim 1 or 2, wherein the carbide particles comprises Fe3C; and at least one of Ti(C,N), Nb(C,N), ZrC, WC, VC, TiMoC.

9. The ultra-high strength cold-rolled steel strip according to claim 1 or 2, wherein it has a tensile strength of ≥1450MPa; an impact toughness at room temperature of ≥38J/cm²; a hydrogen-induced cracking resistance that satisfies: the U-bend specimen with preset stress equal to one time the tensile strength does not crack after being soaked in hydrochloric acid at a concentration of 1mol/L for more than 300 hours; and a hydrogen-induced cracking resistance after heating and holding at 170°C for 20 minutes that satisfies: the U-bend specimen with preset stress equal to 1.2 times tensile strength does not crack after being soaked in hydrochloric acid at a concentration of 1mol/L for more than 300 hours; preferably, it has a yield strength of 1190-1370MPa, a tensile strength of 1470-1650MPa, an elongation of 5-7% and an impact toughness at room temperature of 44-47J/cm².

10. A manufacturing method for the ultra-high strength cold-rolled steel strip according to any one of claims 1-9, which comprises steps of:
(1) smelting and casting;
(2) hot-rolling: wherein the steel is heated to 1150~1200°C and held for 40~50min with a final rolling temperature controlled at 870~920°C, and rapidly cooled to a coiling temperature after rolling with a cooling rate of 20~50°C/s; wherein the coiling temperature is controlled at 500~600°C and cooled under control after coiling;
(3) cold rolling after pickling;
(4) continous annealing;
(5) tempering: the steel is heated to a tempering temperature of 200~300°C by induction heating and held for 150s or more.

11. The manufacturing method according to claim 10, wherein in step (2), after coiling, the steel is firstly cooled by air cooling until the surface temperature of the steel coil is 400-500°C, and then cooled by fan blowing until the surface temperature of the steel coil is lower than 200°C.

12. The manufacturing method according to claim 10, wherein in step (3), the cold rolling reduction rate is controlled at 30~65%.

13. The manufacturing method according to claim 10, wherein in step (4), the steel is heated to the austenitic single-phase zone at a heating rate of 5 °C/s or more and held for 30~120s; then cooled to 700~780°C at a rate of 3~10°C/s, then cooled to 100°C or lower by water cooling at a rate of no less than 700°C/s, and then pickled.

14. The manufacturing method according to claim 10, wherein in step (5), before tempering, the steel plate is firstly alkaline washed to remove the residual acid liquid on the surface of the steel plate; preferably, the tempering time is preferably controlled not less than 200s; more preferably, the tempering temperature is controlled at 200-250 °C and the tempering time is 400-500s.

15. The manufacturing method according to claim 10, which further comprises step (6) leveling, wherein the leveling rate is controlled at ≤0.3%.
